Europäisches Patentamt
European Patent Office
Office européen des brevets

(19) (11) Publication number: **0 251 649 A2**

(12) **EUROPEAN PATENT APPLICATION**

(21) Application number: **87305565.1**

(22) Date of filing: **23.06.87**

(51) Int. Cl.[4]: **C08L 81/02** , C08K 3/00 , C08K 3/22 , H01L 23/30

A request for correction of errors on pages 1,7, and 10 of the originally filed application documents has been filed pursuant to Rule 88 EPC. A decision on the request will be taken during the proceedings before the Examining Division (Guidelines for Examination in the EPO, A-V, 2.2).

(30) Priority: **23.06.86 JP 146725/86**

(43) Date of publication of application: **07.01.88 Bulletin 88/01**

(84) Designated Contracting States: **DE FR GB**

(71) Applicant: **KUREHA KAGAKU KOGYO KABUSHIKI KAISHA**
**9-11 Horidome-cho 1-chome Nihonbashi Chuo-ku Tokyo(JP)**

(72) Inventor: **Katto, Takayuki**
**1-5, Nakaoka-Cho 1-Chome Iwaki-Shi Fukushima-Ken(JP)**
Inventor: **Tada, Masahito**
**154-1, Harada Nishiki-Machi Iwaki-Shi Fukushima-Ken(JP)**
Inventor: **Kouyama, Toshitaka**
**2-12, Nagaoka-Cho 4-Chome Iwaki-Shi Fukushima-Ken(JP)**

(74) Representative: **Laredo, Jack Joseph**
**Elkington and Fife High Holborn House 52/54 High Holborn London, WC1V 6SH(GB)**

(54) **Polyarylene sulfide resin composition and process for producing the same.**

(57) A polyarylene sulfide resin composition having little free ion impurity, which comprises 100 parts by weight of a composition comprising 25 to 70% by weight of a polyarylene sulfide and 30 to 75% by weight of a non-fibrous filler and/or a fibrous filler, and 0.1 to 10 parts by weight of at least one ion exchanger selected from inorganic ion exchangers having water of hydration with ion trapping capability. Preferable inorganic ion exchanger is antimony pentoxide hydrate or bismuth trioxide as such or as a double salt of the two, which more preferably has been heated at 250 to 400°C for at least 10 minutes.

EP 0 251 649 A2

# POLYARYLENE SULFIDE RESIN COMPOSITION AND PROCESS FOR PRODUCING THE SAME

## BACKGROUND OF THE INVENTION

### Field of the art

This invention relates to compositions particularly suitable for encapsulation or packaging of electronic parts and injection molding in general. More particularly, the present invention relates to a resin composition for encapsulation of electronic parts and injection molding in general which has extremely little free ion impurity.

### Prior art

Electronic parts such as ICs, transistors, diodes and capacitors are encapsulated with ceramics or resins for purposes such as prevention of changes in characteristics due to the outer atmosphere, prevention of deformation, and maintenance of electrical insulation.

For encapsulation with a resin, a thermosetting resin, particularly an epoxy resin, has been used in the prior art. However, a thermosetting resin has certain drawbacks such as that the resin has poor shelf-life, that the molding time is prolonged because a long time is required for thermosetting during molding, further that post-cure for a long time is required, and that reutilization of the once-cured resin is impossible. As a method for solving such drawbacks of encapsulation with a thermosetting resin, an encapsulation method with low-pressure injection molding by the use of a polyphenylene sulfide which is a thermoplastic resin (Japanese Patent Publication No. 2790/1981, Japanese Laid-Open Patent Applications Nos. 22363/1978, 81957/1981, 20910/1984 and 20911/1984) has been proposed.

Polyphenylene sulfide (hereinafter sometimes abbreviated as PPS) is usually prepared by condensation reaction between a dihalogenated benzene and sodium sulfide, and a large amount of sodium chloride is produced as a by-product in the case of such a reaction. For molded or formed products in general and, above all, encapsulation of electronic parts, particularly IC encapsulation, a composition with extremely little ionic impurity is demanded, but since sodium chloride is liable to remain in accompaniment with the above preparation method in PPS, it has been difficult to obtain a product with extremely small amount of ionic impurity. For this reason, various methods for removing ionic impurities in PPS have been proposed in the prior art (e.g., Japanese Laid-Open Patent Applications Nos. 108135/1982, 15430/1984, 217728/1984 and 219331/1984). However, many of those methods employ special solvents and hydrophilic polymers and therefore were not satisfactory methods in cost.

It is also proposed to lower the solidifying temperature, viz. crystallization temperature, during molding or forming such as compression molding or injection molding by blending or formulating bismuth, antimony or compounds thereof, which have been known as radical trapping agents used as flame retardants of synthetic resins in PPS resin (Japanese Laid-Open Patent Applications No. 11358/1984). However, to the best of our knowledge, these substances have no capability of trapping free ions, and moreover there is also the problem of prolonged molding cycle due to lowering of the crystallization temperature to an economical disadvantage.

## SUMMARY OF THE INVENTION

An object of the present invention is to provide a solution to the problem described above. This object has been accomplished by blending or formulation of an inorganic ion exchanger together with non-fibrous and/or fibrous filler into a polyarylene sulfide resin such as PPS.

Accordingly, the polyarylene sulfide resin composition having little free ion impurity according to the present invention comprises 0.1 to 10 parts by weight of at least one compound selected from inorganic ion exchangers having water of hydration with ion trapping capability and 100 parts by weight of a composition comprising 25 to 70 wt.% of a polyarylene sulfide and 30 to 75 wt.% of a nonfibrous filler and/or a fibrous filler.

Furthermore, the polyarylene sulfide resin composition having little free ion impurity according to the present invention is characterized in that it is produced by a process comprising adding 0.l to l0 parts by weight of at least one compound selected from inorganic ion exchangers having water of hydration with ion trapping capability into a composition comprising 25 to 70 wt.% of a polyarylene sulfide and 30 to 75 wt.% of a non-fibrous filler and/or a fibrous filler and forming the resultant mixture at 250 to 400°C.

Thus, the present invention has succeeded in lowering the content of free ion impurity by formulation of an inorganic ion exchanger into a polyarylene sulfide (hereinafter called PAS) resin.

A specific example of the inorganic ion exchanger to be formulated together with a filler according to the present invention belongs to the category of antimony compounds or bismuth compounds. Not only is the content of free ion impurity lowered by addition thereof, but also the crystallization temperature from the molten state of this composition becomes higher. In view of the fact that the crystallization temperature is lowered when a bismuth or antimony compound is formulated, the effect attained by the present invention should be said to be entirely unexpected. As the inorganic ion exchanger, those exhibiting alkali metal ion selective trappability, those exhibiting halogen ion trappability, and those exhibiting simultaneously an alkali metal ion and a halogen ion selective trappability may be mentioned. By suitable formulation of these, free ion impurities contained in the filler other than these ions inherent in PAS can also be trapped.

The small content of free ion impurity indicates that the composition of the present invention is very useful as a resin material for encapsulation, but the composition of the present invention is also useful as a resin for injection molding in general. This is because electrical properties such as tan $\delta$ and dielectric characteristics are improved by the low content of free ionic impurity. Furthermore, by elevation of the melt crystallization temperature of PAS, solidification occurs earlier, whereby improvement in economy through shortening of the molding cycle can also be expected.

The composition of the present invention also possesses, as a matter of course, the characteristics of the PAS composition known in the art, namely, high heat resistance, high chemical resistance, easy processability, good mechanical characteristics, and good flame retardancy as well.

## DETAILED DESCRIPTION OF THE INVENTION

### PAS composition

#### Formation of basic structure of PAS

The main component PAS of the composition according to the present invention means a polymer having recurring units $(-Ar-S-)_n$ (Ar: arylene group) as the main constituent and containing this constituent in an amount of 70 mol% or more, more preferably 80 mol% or more.

As the arylene group, those comprising paraphenylene group or those constituted mainly of p-phenylene group are preferred in respect of physical properties such as heat resistance, moldability, and mechanical characteristics.

As an arylene group other than para-phenylene group, it is possible to use one having a m-phenylene group

( 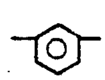 ),

o-phenylene group

( 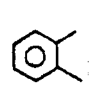 ),

alkyl-substituted phenylene group

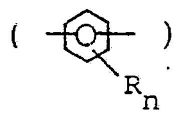

(R: alkyl group, preferably loweralkyl group and n: integer of 1 to 4), p,p'-diphenylsulfone group

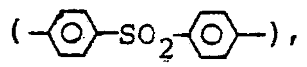

p,p'-biphenylene group

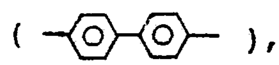

p,p'diphenylene ether group

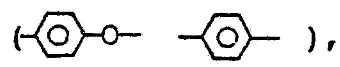

p,p'-diphenylenecarbonly group

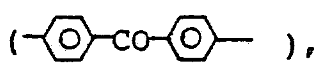

napthalene group

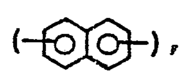

trifunctional unit

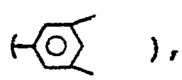

etc.

The trifunctional (and also including tetrafunctional) unit is desirably contained in an amount of l mol% or less.

As the polymerized form of PAS, not only homopolymers containing only recurring units of (-Ar-S-), but also either of copolymers containing different kinds of recurring units, namely a random copolymer, a block copolymer or a graft copolymer, may be employed. When much of copolymer components, namely, different kinds of recurring units, are contained, a block copolymer or a graft copolymer is desirable for maintaining crystallinity of PAS. This is because block copolymers and graft copolymers are substantially equal with respect to processability as compared with random copolymers, but they are remarkably superior to random copolymers with respect to physical properties (heat resistance, mechanical properties, etc.). The melt viscosity of PAS to be used in the present invention may appropriately be within the range of from 5 to 500 poise at 3l0°C/shearing rate $l0^4$ (sec.) $^{-1}$ when this composition is used for encapsulation, particularly preferably within the range from l0 to 200 poise. With a viscosity less than 5 poise, the molecular weight is too small, whereby there is the possibility of a molded product with insufficient strength being produced, whereas with a viscosity in excess of 500 poise, the melt viscosity of the composition is

too high, whereby there is unfavorably the possibility of the bonding wire being cut or of poor filling being caused during encapsulation molding of IC. On the other hand, when the composition of the present invention is used for molded or formed products in general, the PAS can have a melt viscosity over 500 poise.

The PAS having such properties as described above can be prepared according to the method for preparation of PAS known in the art, for example, by polycondensation of an alkali sulfide and a dihaloaromatic compound with a splitting of the alkali halide produced in an aprotic organic solvent.

## Filler

The PAS composition according to the present invention in addition to PAS, first of all, comprises a non-fibrous or/and fibrous filler.

PAS is essentially a thermoplastic resin and therefore the PAS composition obtained by the present invention can be formulated with various additives according to conventional formulation used for thermoplastic resins, but in order to discriminate the filler from the resin formulating material (as described in detail hereinafter), the filler as referred to in the present invention means a material which can substantially maintain its form during kneading of the PAS. Accordingly, the material of the filler is ordinarily and desirably an inorganic material except for a non-meltable resin such as a high melting point resin such as Aramide or a thermoset resin.

Examples of suitable fillers are specifically powdery inorganic fillers such as mica, $TiO_2$, $SiO_2$, $Al_2O_3$, $CaCO_3$, carbon black, talc, $CaSiO_3$, and $MgCO_3$, with particle sizes of 0.5 mm or less. Particles in excess of 0.5 mm are not desirable because there is the risk of cutting bonding wires when the filled PAS is used for encapsulation.

Other examples of fillers which can be formulated in the composition of the present invention, in place of non-fibrous materials as mentioned above or to be used in combination therewith, are fibrous fillers comprising materials such as glass, calcium silicate, carbon, graphite, Aramide, potassium titanate, silica, Wallastonite, ceramics, and worked minerals (those with fiber diameter of about 0.l to 25 microns, aspect ratio of 5 or higher being preferred with respect to improvement of reinforcing effect).

In the present invention, fibrous fillers are utilized for imparting sufficient mechanical strength to the composition, and non-fibrous fillers are utilized for increasing the thermal conductivity of the composition and lowering the linear expandability and also for improvement of economy. For balance of physical properties such as strength, thermal conductivity, and linear expandability of the molded or formed product, it is desirable to use fibrous fillers and non-fibrous fillers at the same time, and the proportion in that case is preferably controlled between 99/l0 and l0/90 when the total amount of the fillers is l00.

The amount of the filler formulated in the composition of the present invention is preferably 20 to 75 wt.%, particularly 40 to 70 wt.%, when the total amount of the PAS and the filler is l00. In excess of 75 wt.%, the melting viscosity of the composition becomes higher, whereby there is unfavorably the possibility of cutting of bonding wire during encapsulation in the case of a composition for IC encapsulation. On the other hand, with an amount less than 20%, the coefficient of thermal expansion becomes great, whereby there is also unfavorably the possibility of cutting of bonding wire.

When an inorganic filler is formulated in the composition of the present invention, it is possible for improvement of adhesion between the inorganic filler and the resin or lowering of hygroscopicity of the inorganic filler to use an inorganic filler which has been subjected to a hydrophobic treatment with a surface treating agent such as a silane coupling agent or a titanate coupling agent, or these reagents can be also used by adding to the composition. Further, for enhancing even more the humidity resistance of the composition for encapsulation, a water repellant such as silicone oil, fluorinated oil, or paraffin can be added in the composition.

To the PAS composition according to the present invention, various additives can be blended following the conventional formulations in thermoplastic resins, corresponding to the fact that PAS is a thermoplastic resin. Accordingly, also in the present invention, the composition can be also prepared by blending with a resin such as polyimide, polyamide, polyether ether ketone, polysulfone, polyether sulfone, polyether imide, polyarylene, polyphenylene ether, polyethyleneterephthalate, polybutyleneterephthalate, polyacetal, polypropylene, polyethylene, ABS, polyvinyl chloride, polymethyl methacrylate, polystyrene, polyvinylidene fluoride, polytetrafluoroethylene, tetrafluoroethylene copolymer, etc. These thermoplastic resins commonly have melting points lower than the kneading processing temperature of PAS, and therefore these are not

fillers as understood in the present invention. Other than these, a small amount of additives such as stabilizers, nucleation agents, lubricants, anticorrosive agents, coupling agents, antioxidants, colorants, mold release agents, hardening agents, etc., may be added in the composition of the present invention within the range which is not outside of the object of the present invention.

## Inorganic ion exchanger/ion trapping agent

As the inorganic ion exchanger to be used in the present invention, those exhibiting selective trappability of alkali metal ions, or those exhibiting selective trappability of halogen ions or those capable of trapping both alkali metal ions and halogen ions are used. As the agent most preferably used for trapping of alkali metals, there is an antimony compound, preferably hydrate of antimony pentoxide, and as the agent most preferably used for a trapping of halogen ions, there is a bismuth compound, preferably hydrate of bismuth trioxide. Also, these can be used as a mixture of at least two kinds, and particularly for trapping both alkali metal ions and halogen ions, the above two kinds of compounds can be used in combination, or a double salt of a compound containing antimony and a compound containing bismuth such as hydrate of bismuth antimonate including a compound of a formula $Sb_2Bi_aO_b(OH)_c(NO_3)_d \bullet 2H_2O$ wherein a:l-2, b:3.5-8, c:0.2-3 and d:0.2-3 can be used.

As an inorganic ion exchanger suitable for use in the present invention, an antimony and/or bismuth compound is used, typically any of those as mentioned above. In this connection, hydrate of antimony oxide has very low solubility in various acids, alkalis and salts and besides has the specific feature of chemical stability, being also stable with respect to oxidizing agents such as chlorine and hydrogen peroxide. From the view point of improvement of uniform dispersion into PAS and probability of contact with free ion impurities, the inorganic ion exchanger is preferably in fine powdery form.

More preferably, the inorganic ion exchanger having water of hydration with ion trapping capability is antimony pentoxide hydrate, bismuth trioxide hydrate or a double salt of these two. Among them, antimony pentoxide hydrate is the most preferable. The reason why these particular compounds are preferable is that these compounds, more particularly antimony pentoxide hydrate, will provide formed or molded articles produced through molten state by, for example, extrusion of a molten mass of the composition with less coloring than other antimony and/or bismuth compounds having a nitrate moiety such as $Sb_2Bi_aO_b(OH)_c(NO_3)_d \bullet 2H_2O$ referred to above. Since polyarylene sulfide compositions such as those in accordance with the present invention are processed when they are molten into formed or molded articles, this advantage is material.

As to the details of inorganic ion exchanger, reference may be made to, for example, "Chemical Handbook" in Japanese (third edition, basic volume, pp. 580 - 58l, edited by Chemical Society of Japan).

The amount of these inorganic ion exchangers added should be 0.l to l0 parts by weight based on l00 parts by weight of the total amount of PAS and the inorganic filler. If it is less than 0.l part by weight, the effect of trapping ionic impurity is small, while with an amount more than l0 parts by weight, no more effect can be obtained, and also economical disadvantage is brought about.

## Preparation of PAS composition

The PAS composition according to the present invention can be produced according to a process which accompanies the step of melting PAS (and a thermoplastic resin when such is blended) and moreover guarantees uniform dispersion of the participating components.

Specifically, with a composition comprising 25 to 75 wt.% of PAS and 20 to 75 wt.% of a non-fibrous filler and/or a fibrous filler, 0.l to l0 parts by weight of an inorganic ion exchanger having hydrated water with ion trapping capability is mixed at one time or stepwise per l00 parts by weight of said composition, and then the mixture is molded or formed at a temperature of 250 to 400°C, preferably 300 to 380°C directly into a desired shape, or into pellets before a molding or forming at a temperature of 250 to 400°C. At a temperature lower than 250°C, PAS and a PAS composition will not be melted, whereby it is undesirably difficult to mold or form it into a desired shape. On the other hand, at a temperature exceeding 400°C, liberation of hydrated water in some kinds of inorganic ion exchangers may occur, and also the PAS composition may sometimes begin, undesirably, to decompose at 400°C or higher. For example, when the inorganic ion exchanger is an antimony pentoxide hydrate or a hydrate of a double salt of a compound containing antimony and a compound containing bismuth, a part of water of hydration is lost at 200°C to 300°C in either case, and ion exchangeability is lost at 400°C or higher. Also bismuth trioxide hydrate

gradually loses water of hydration at 400°C or higher. Liberation of water of hydration not only leads to lowering in ion exchange capacity, but also the water liberated may cause the molded product to foam. Accordingly, the inorganic ion exchanger may preferably be subjected previously to heat treatment at 250 to 400°C for at least 10 minutes, whereby generation of gas bubbles due to dehydration can be suppressed. In this case, it is preferable to mix the inorganic ion exchanger which has been subjected to heat treatment with PAS and a filler and mold or form the mixture in an atmosphere under which the exchanger does not absorb moisture.

## Uses of PAS composition

The PAS composition containing the inorganic ion exchanger having free ion trapping capability of the present invention has several useful characteristics such as few free ions, good electrical properties, excellent mechanical characteristics, easy color control (for which purpose, antimony/molybdenum compound should desirably be colorless or white or pale yellow), and increased speed of molding cycle because of high melt crystallization temperature and crystallization speed. Accordingly, this composition can be applied for various melt processing methods such as extrusion processing, compression molding processing, typical processing of various electronic electrical parts for encapsulation of electronic parts and injection molding of general articles.

The molded or formed products obtained according to these processing methods can be used widely in fields such as the electronic, electrical, and chemical fields and for various products such as precise instruments, automobiles, aircraft, medicines, food packagings, food containers and articles for sports in the form of molded product, sheets, films, fibers, pipes, profiles, IC insulating materials, etc.

## EXPERIMENTAL EXAMPLES

### Examples 1 through 4

To 100 parts by weight of a composition comprising 40 wt.% of a PPS having a melt viscosity of 45 poise (310°C, shearing rate $10^4$ (sec.)$^{-1}$ ), 40 wt.% of Wallastonite fiber (NYADG produced by NYCO Co.) (fiber diameter 8.2 microns, aspect ratio 20) and 20 wt.% of molten silica (FS-44 produced by Denki Kagaku Kogyo K.K.) (mean particle size 8.8 microns) were added to and mixed with 0 to 5 parts by weight of $Sb_2Bi_{1.4}O_{6.4}(OH)_x(NO_3)_y \bullet 2H_2O$ powder where x and y are each 0.7, and each mixture was extruded by melting and kneading through a kneading extruder.

A part of the extrudate obtained was frozen and crushed into fine particles of particle sizes of 0.5 nm or less.

The melting crystallization temperature of each sample obtained by differential scanning calorimeter (Mettler DSC-20) and the results of measurement of the quantity of ions extracted with hot water from the crushed particles are shown in Table I.

It can be understood that the amount of Na ions and the amount of Cl ions extracted are reduced by addition of the ion trapping agent. Also, at the same time, the crystallization temperature from the molten state is elevated as suitable for injection molding.

Hot water extraction test and analysis of alkali metal ions and halogen ions were conducted by measuring precisely several grams of the sample crushed to about 100 mesh, placing the samples into a pressure vessel

Table 1

| Example No. | Ion trapping agent added (parts by wt.) | Melt crystalliza - tion Temp. (°C) | Amount of ions extracted | | Color* |
|---|---|---|---|---|---|
| | | | Na+ (ppm/solid) | Cl- (ppm/solid) | |
| Comp. Example | 0 | 238 | 20 | 14 | white yellow |
| Example 1 | 1 | 247 | 4 | 10 | dark brown |
| Example 2 | 2 | 249 | 2 | 10 | " |
| Example 3 | 3 | 251 | <1 | 7 | " |
| Example 4 | 5 | 251 | <1 | 7 | " |

* The color of the extrudates

(volume about l00 ml) with anti-corrosive coating on the inner surface, adding 50 ml of the distilled water and, after sealing, placing stationarily in a thermostat tank at l60°C for 20 hours, filtering after cooling, and measuring $Na^+$ concentration in the filtrate by high frequency induction bound plasma emission analysis, and $Cl^-$ concentration by ion chromatography.

Examples 5 through 8

To respective aliquots each of l00 parts by weight of a composition comprising 40 wt.% of a PPS having a melt viscosity of 250 poise (3l0°C, shearing rate $10^4$ $(sec.)^{-1}$), 30 wt.% of a glass fiber (03DE-404, produced by Asahi Fiber Glass K.K.) (fiber diameter 6 microns, length 3 mm) and 30 wt.% of molten silica (FS-44, produced by Denki Kagaku Kogyo K.K.), each of the following ion trapping agents was added.

(l) l.0 to 2.0 parts by weight of $Sb_2O_5 \bullet 2H_2O$ powder

(2) l.0 part by weight of $Bi_2O_3 \bullet 3H_2O$ powder

(3) 0.5 parts by weight of $Sb_2O_5 \bullet 2H_2O$ powder and 0.5 parts by weight of $Bi_2O_3.3G_2O$ powder

(4) l.0 to 3.0 parts by weight of $Sb_2Bi_{1.4}O_{6.4}(OH)_x(NO_3)_y \bullet 2H_2O$ powder wherein x is 0.7 and y is 0.7.

Each mixture was extruded after melting and kneading through a kneading extruder.

Similarly as in Example l, the melt crystallization temperature and the extractable ion impurity of the fed extruded composition were measured. The results are shown in Table 2.

<u>Table 2</u>

| Example No. | Ion trapping agent added (parts by wt.) | Melt crystallization temperature (°C) | Extraction test | | |
|---|---|---|---|---|---|
| | | | $Na^+$ (ppm/solid) | $Cl^-$ (ppm/solid) | Color* |
| Comparative Example | 0 | 235 | 55 | 22 | white yellow |
| Example 7 | $Sb_2Bi_{1.4}O_{6.4}(OH)_x(NO_3)_y \cdot 2H_2O$<br>1.0<br>3.0 | 239<br>250 | 12<br>2 | 15<br>9 | dark brown |
| Example 5 | $Bi_2O_3 \cdot 3H_2O$<br>1.0 | - | 53 | 12 | brown |
| Example 6 | $Sb_2O_5 \cdot 2H_2O/Bi_2O_3 \cdot 3H_2O$<br>0.5/0.5 | 239 | 15 | 16 | " |
| Example 4 | $Sb_2O_5 \cdot 2H_2O$<br>1.0<br>2.0 | 241<br>244 | 9<br>2 | 21<br>19 | pale brown |

* The color of the extrudates

## Claims

1. A polyarylene sulfide resin composition having little free ion impurity, which comprises 100 parts by weight of a composition comprising 25 to 70% by weight of a polyarylene sulfide and 30 to 75% by weight of a non-fibrous filler and/or a fibrous filler, and 0.1 to 10 parts by weight of at least one ion exchanger selected from inorganic ion exchangers having water of hydration with ion trapping capability.

2. A polyarylene sulfide resin composition according to claim 1, wherein the inorganic ion exchanger having water of hydration with ion trapping capability is selected from the group consisting of compounds containing at least one of antimony and bismuth, which are compounds of antimony, compounds of bismuth, compounds containing antimony and bismuth and mixtures of at least two of these compounds.

3. A polyarylene sulfide resin composition according to claim 2, wherein the inorganic ion exchanger having water of hydration with ion trapping capability contains antimony and bismuth as a mixture of the respective compounds or as a compound containing both.

4. A polyarylene sulfide resin composition according to claim 1, wherein the inorganic ion exchanger having water of hydration with ion trapping capability is selected from the group consisting of antimony pentoxide hydrate, bismuth trioxide hydrate, hydrate of a double salt of a compound containing antimony and a compound containing bismuth, and a mixture of at least two kinds of these compounds.

5. A polyarylene sulfide resin composition according to claim 4, wherein the inorganic ion exchanger having water of hydration with ion trapping capability is (a) antimony pentoxide hydrate, (b) bismuth trioxide hydrate and/or (c) a hydrate of a double salt of a compound containing antimony and a compound containing bismuth.

6. A process for producing a polyarylene sulfide resin composition having little free ion impurity, which comprises adding 0.1 to 10 parts by weight of at least one compound selected from inorganic ion exchangers having water of hydration with ion trapping capability to 100 parts by weight of a composition comprising 25 to 70 wt.% of a polyarylenesulfide and 30 to 75 wt.% of a non-fibrous filler and/or a fibrous filler and forming the resultant mixture at 250 to 400°C into a form desired.

7. A process for producing a polyarylene sulfide resin composition according to claim 6, wherein the inorganic ion exchanger having water of hydration with ion trapping capability is selected from the group consisting of compounds containing at least one of antimony and bismuth, which are compounds of antimony, compounds of bismuth, compounds containing antimony and bismuth and mixtures of at least two of these compounds.

8. A process for producing a polyarylene sulfide resin composition according to claim 6, wherein the inorganic ion exchanger having water of hydration with ion trapping capability contains antimony and bismuth as a mixture of the respective compounds or as a compound containing both.

9. A process for producing a polyarylene sulfide resin composition according to claim 6, wherein the inorganic ion exchanger having water of hydration with ion trapping capability is antimony pentoxide hydrate, bismuth trioxide hydrate or a hydrate of a double salt of a compound containing antimony and a compound containing bismuth.

10. A process for producing a polyarylene sulfide resin composition according to claim 6, wherein the inorganic ion exchanger having water of hydration with ion trapping capability is (a) antimony pentoxide hydrate (b) bismuth trioxide hydrate and/or (c) a hydrate of a double salt of a compound containing antimony and a compound containing bismuth.

11. A polyarylene sulfide resin composition as claimed in claim 1, wherein the inorganic ion exchanger having water of hydration with ion trapping capability is antimony pentoxide hydrate.

12. A polyarylene sulfide resin composition as claimed in claim 1, wherein the inorganic ion exchanger having water of hydration with ion trapping capability is bismuth trioxide hydrate.

13. A polyarylene sulfide resin composition as claimed in claim 1, wherein the inorganic ion exchanger having water of hydration with ion trapping capability is a double salt of antimony pentoxide hydrate and bismuth trioxide hydrate.

14. A polyarylene sulfide resin composition as claimed in claim 1, wherein the inorganic ion exchanger having water of hydration with ion trapping capability is a member selected from the group consisting of antimony pentoxide hydrate, bismuth trioxide hydrate and a double salt of antimony pentoxide hydrate and bismuth trioxide hydrate which have been heated at 250 to 400°C for at least 10 minutes.

ELKINGTON AND FIFE

Chartered Patent Agents & European Patent Attorneys
Patents Trade Marks Designs

SYDNEY SMITH, M.A., C.P.A., E.P.A.
J. J. LAREDO, M.Sc., C.P.A., E.P.A.
J. I. MARCHANT, B.Sc., C.P.A., E.P.A.
G. A. BOON, M.A., C.P.A., E.P.A., M.I.T.M.A.
DIANA KYLE, B.Sc., C.P.A., E.P.A.
J. H. LEWIN, M.A., C.P.A., E.P.A., M.I.T.M.A.
CLIVE FROUD, B.Sc., C.P.A., E.P.A.
FIONA CRAWFORD, M.A., C.P.A., E.P.A.

P. J. CHARLTON, B.Sc., C.P.A., E.P.A.

HIGH HOLBORN HOUSE
52/54 HIGH HOLBORN
LONDON WC1V 6SH

TELEPHONE 01-405 3505/6 01-405 3030
TELEX 27136
CABLES ELKFIF LONDON WC1
FAX (GROUPS 2 & 3) 01-405 1508
SEVENOAKS OFFICE & ACCOUNTS
53/55 HIGH STREET
SEVENOAKS, KENT TN13 1JF
TEL. SEVENOAKS (0732) 458881/459881
AND AT MUNICH

CONSULTANT
D. R. FENTIMAN, C.P.A.

OUR REFERENCE YOUR REFERENCE

JJL/011/PB/5350E

30th September, 1987.

The European Patent Office,
Branch at The Hague,
Receiving Section,
P.B.5818 Patentlaan 2,
2280 HV RIJSWIJK (ZH),
THE NETHERLANDS.

Registered Mail

Dear Sirs,

Re: European Patent Appln. 87 305565.1
Kureha Kagaku Kogyo Kabushiki Kaisha

We are writing to request the amendment of certain errors in the specification of the above mentioned application. We enclose herewith in triplicate, new pages 1, 7 and 10.

An explanation of the term ICs has been inserted at line 14 of the new page 1.

The proportion of fibrous to non-fibrous fillers at page 7, line 16 has been corrected to "90/10 and 10/90". The amount of filler has also been amended to "30-75 wt%" at page 7, line 19 and page 10, line 23 and a similar amendment has been made at page 7, line 26. The basis for this amendment may be found in claims 1 and 6 of the text.

We would respectfully request that the amended pages should be considered in the examination of this case.

Yours faithfully,

J. J. L...
European Patent Attorney
Elkington and Fife

Enc. Amended pages in triplicate.